(19) Europäisches Patentamt
European Patent Office
Office européen des brevets

(11) **EP 2 184 580 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(51) Int Cl.:
***G01B 21/26*** *(2006.01)*    ***G01M 17/10*** *(2006.01)*

(21) Anmeldenummer: **08019564.7**

(22) Anmeldetag: **08.11.2008**

(54) **Vorrichtung und Verfahren zum Messen des Anlaufwinkels von Rädern eines Schienenfahrzeugs**

Device and method for measuring the angle of attack of wheels on a railway vehicle

Dispositif et procédé destinés à la mesure de l'angle d'approche de roues d'un véhicule sur rail

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**12.05.2010 Patentblatt 2010/19**

(73) Patentinhaber: **ALSTOM Transport SA 92300 Levallois-Perret (FR)**

(72) Erfinder:
• **Tinter, Malte, Dipl.-Ing. 38118 Braunschweig (DE)**

• **Friedrich, Markus, Dipl.-Ing. 38159 Vechelde (DE)**

(74) Vertreter: **Lieb, Fabian et al Lavoix Bayerstraße 85a 80335 München (DE)**

(56) Entgegenhaltungen:
**US-A- 5 368 260    US-A1- 2006 010 971**

**Beschreibung**

Der Anlaufwinkel α ist definiert als Winkel zwischen einer Radebene und der Längsachse der Schiene, auf der das Rad rollt. Die Kenntnis des Anlaufwinkels während der Fahrt ist eine wichtige Größe, um bspw. die Geräuschentwicklung des Schienenfahrzeugs, das Verschleißverhalten von Radsatz und Schienen sowie anderer komfortrelevanter, aber auch sicherheitsrelevanter (Stichwort: Sicherheit gegen Entgleisen) Eigenschaften des Schienenfahrzeugs zu erfassen.

Aus US-5368260 ist ein Verfahren bekannt, wobei die Entfernung zwischen einem Entfernungsmesser neben einer Schiene und mehreren Punkten am vorbeifahrenden Rad gemessen wird, um daraus den Anlaufwinkel zu bestimmen.

Vorrichtungen, mit denen der Anlaufwinkel während der Fahrt des Schienenfahrzeugs kontinuierlich erfasst werden kann, sind am Markt nicht bekannt.

Daher liegt der Erfindung die Aufgabe zugrunde, eine Vorrichtung und ein Verfahren zum Messen des Anlaufwinkels während der Fahrt eines Schienenfahrzeugs bereitzustellen. Sowohl die Vorrichtung als auch das Verfahren sollen einfach aufgebaut und robust auch bei widrigen Einsatzbedingungen funktionieren.

Diese Aufgabe wird erfindungsgemäß mit einer Vorrichtung gemäß Anspruch 1 zum Messen des Anlaufwinkels a zwischen einem Rad und einer Schiene gelöst.

Durch die erfindungsgemäße Vorrichtung, welche beispielsweise mittelbar oder unmittelbar an einem Lagerbock einer Radachse beziehungsweise eines Radsatzes befestigt werden kann, ist es möglich, während der Fahrt den Abstand des oder der Referenzpunkte zu der Schiene zu ermitteln. Unter Berücksichtigung des orthogonalen Abstands zwischen Drehachse des Rades und dem oder den Referenzpunkten ist es damit möglich, den Anlaufwinkel α unter Anwendung einfacher trigonometrischer Funktionen zu bestimmen. Somit ist es möglich, während der Fahrt des Schienenfahrzeugs für jeden Radsatz den Anlaufwinkel während der Fahrt in Echtzeit zu ermitteln. Die Auswertung dieser Daten erlaubt Rückschlüsse auf das Fahrverhalten des Schienenfahrzeugs und gibt Hinweise auf Verbesserungspotenziale des Systems Rad/Schiene, um Geräuschentwicklung, Verschleißverhalten und Sicherheit des Schienenfahrzeugs zu verbessern.

Die erfindungsgemäße Vorrichtung ist einfach aufgebaut, so dass sie auch im rauen Testbetrieb problemlos über lange Zeit eingesetzt werden kann. Dabei ist es möglich, für bestimmte Drehgestelle bzw. Radsatztypen spezielle Vorrichtungen vorzusehen, die an dort ohnehin vorhandenen Befestigungspunkten angeschraubt werden. Alternativ ist es natürlich auch möglich, eine Universalvorrichtung bereitzustellen, die mit Spannpratzen, Klemmstücken oder anderen Einrichtungen am Lagerbock beziehungsweise einem drehfesten Teil des Drehgestells befestigt werden kann.

Es hat sich weiter als vorteilhaft herausgestellt, wenn der oder die Referenzpunkte an einem Längsträger angeordnet sind und der Längsträger an einem Lagerbock des Rads mindestens mittelbar befestigt ist.

In diesem Fall ist es besonders vorteilhaft, wenn der erste Sensor und der optionale zweite Sensor an dem Längsträger des Rads mindestens mittelbar befestigt sind. Besonders bevorzugt werden die Sensoren im Bereich der Referenzpunkte befestigt. Dadurch ist es möglich, die von den Sensoren erfasste Entfernung zwischen den Referenzpunkten ohne weitere Umrechnung als Entfernung zwischen den Referenzpunkten und der Schiene bei der Auswertung der Sensorsignale zu verwenden. Selbstverständlich ist es auch möglich, die Sensoren, insbesondere dann, wenn es sich um Drehwinkelsensoren handelt, an einem anderen Ort als den Referenzpunkten zu befestigen und über entsprechende Umrechnungen die Entfernung zwischen Referenzpunkt und der Schiene zu ermitteln.

Als Sensoren sind verschiedene Sensoren geeignet. Es können sowohl Sensoren, die auf einem berührungslosen Messprinzip basieren, als auch Sensoren, die auf einem mechanisch berührenden Messprinzip, insbesondere auf einem induktiven oder kapazitiven Längenmessverfahren, basieren eingesetzt werden. Dadurch ist es ausreichend, lediglich zwei Sensoren an dem Längsträger zu befestigen und über die Abstandsmessung zwischen den Sensoren und der Schiene die Entfernung festzustellen und entsprechend auszuwerten.

Eine besonders einfache und robuste Ausführung erfindungsgemäßer Sensoren sind so genannte Seilzugsensoren. Diese Seilzugsensoren sind Drehwinkelsensoren, die an einer Seiltrommel befestigt sind. Auf die Seiltrommel wird ein Seilzug aufgewickelt.

Der Seilzug wird in Abhängigkeit des Abstands zwischen Referenzpunkt beziehungsweise Seilzugsensor und Schiene mehr oder weniger weit von der Spule auf- beziehungsweise abgewickelt, so dass aus der Information über den Drehwinkel der Spule der Abstand zwischen Seilzugsensor und der Schiene ermittelt werden kann.

Um die von der Schiene während der Fahrt ausgeübten Kräfte von den Sensoren fernzuhalten, ist es weiter vorzusehen, an dem Längsträger mindestens einen Messbügel drehbar zu lagern, wobei ein Ende des Messbügels mindestens mittelbar an der Schiene, insbesondere dem Schienenkopf, anliegt.

Um den Verschleiß an dem oder den Messbügeln zu minimieren, ist an dem Messbügel oder den Sensoren eine Rolle, beispielsweise in Form eines Kugellagers, dessen Außenring an dem Schienenkopf der Schiene abrollt, ausgebildet.

Wenn die Sensoren als direkt oder mechanisch berührend die Entfernung zwischen Referenzpunkt und Schiene messen, dann kann in vorteilhafter Ausgestaltung vorgesehen sein, an der Messspitze dieser Längenmesssensoren ebenfalls eine Rolle, dessen Außenring an dem Schienenkopf abrollt, vorgesehen sein.

Die eingangs genannte Aufgabe wird ebenfalls gelöst durch ein erfindungsgemäßes Verfahren gemäß Anspruch 9.

Dieses Verfahren lässt sich ohne Weiteres auf einem Mikroprozessor implementieren, so dass die computergestützte vollautomatische Auswertung der Sensorsignale und die Umrechnung in die entsprechenden Anlaufwinkel vollautomatisch und ohne menschliches Zutun in Echtzeit erfolgen kann.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:

Figur 1    eine Draufsicht auf ein Rad und eine Schiene zur Erläuterung und Definition des Anlaufwinkels a,

Figur 2    eine isometrische Darstellung eines ersten Ausführungsbeispiels einer erfindungsgemäßen Messvorrichtung,

Figur 3    eine Draufsicht auf das Ausführungsbeispiel gemäß Figur 2 und

Figur 4    eine Draufsicht auf ein zweites Ausführungsbeispiel einer erfindungsgemäßen Messvorrichtung.

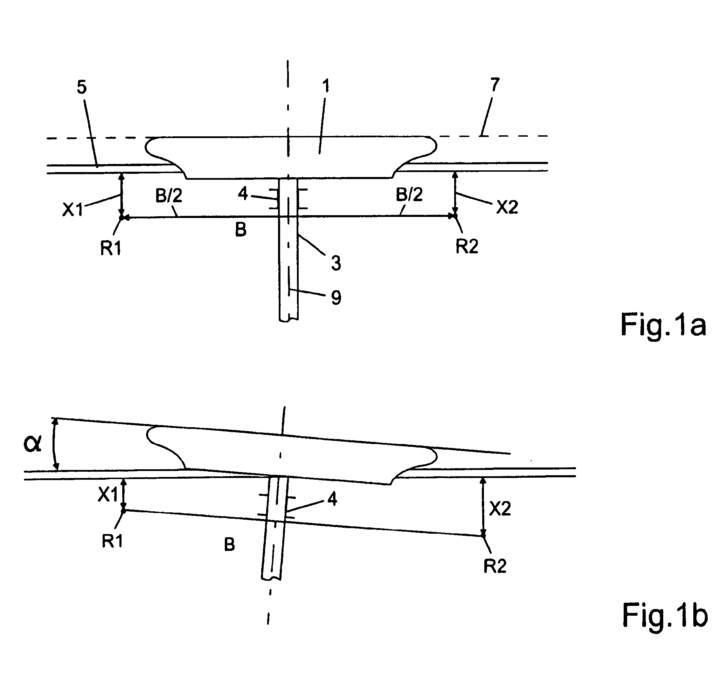

In Figur 1 ist ein Rad 1 eines Schienenfahrzeugs (nicht dargestellt), welches drehbar mit einer Achse 3 verbunden ist und eine Schiene 5 in einer Draufsicht dargestellt.

Die Achse 3 ist an einem schematisch dargestellten Lagerbock 4 eines nicht dargestellten Drehgestells drehbar gelagert.

In der Figur 1a ist eine Radebene, die durch eine gestrichelte Linie 7 angedeutet ist, parallel zu einer Längsachse der Schiene 5 ausgerichtet. Der Winkel zwischen der gestrichelten Linie 7 und der Längsachse der Schiene 5 wird als Anlaufwinkel $\alpha$ bezeichnet. In der Figur 1a verläuft die Linie 7 parallel zur Schiene 5, so dass der Anlaufwinkel $\alpha$ gleich Null ist.

Des Weiteren sind in Figur 1a ein erster Referenzpunkt $R_1$ und zweiter Referenzpunkt $R_2$ eingetragen. Die Referenzpunkte $R_1$ und $R_2$ sind gedachte Punkte, deren Lage relativ zu dem Rad 1 beziehungsweise der Achse 3 konstant ist. Außerdem sind die Referenzpunkte $R_1$ und $R_2$ zu einer Drehachse 9 des Rades 1 in Fahrtrichtung beabstandet. Da die Referenzpunkte $R_1$ und $R_2$ symmetrisch zu einer Drehachse 9 des Rads 1 angeordnet sind, ist der Abstand zwischen den Referenzpunkten $R_1$, $R_2$ und der Drehachse entsprechend B/2. Dies bedeutet, dass die Referenzpunkte $R_1$ und $R_2$ voneinander einen Abstand B aufweisen.

Der Abstand der Referenzpunkte $R_1$ und $R_2$ zur Schiene 5 ist als X1 beziehungsweise X2 in Figur 1 eingetragen.

Da in Figur 1a X1 = X2 ist, ist der Anlaufwinkel $\alpha$ = 0°. In Figur 1b) ist ein Anlaufwinkel $\alpha$ > 0 dargestellt, das heißt die Ebene des Rads und die Schiene 5 schließen einen Winkel $\alpha$ ein. Da die Referenzpunkte $R_1$ und $R_2$ die ortsfest an der relativ zu dem Lager 8 beziehungsweise dem Rad 1 angeordnet sind, sind die Abstände X1 und X2, zwischen dem ersten Referenzpunkt $R_1$ und der Schiene 5 beziehungsweise dem zweiten Referenzpunkt $R_2$ und der Schiene 5 unterschiedlich (X1 $\neq$ X2). Wenn man nun in den Referenzpunkten $R_1$ und $R_2$ Sensoren zur Entfernungsmessung anordnet, welche während der Fahrt des Schienenfahrzeugs die Abstände X1 und X2 erfassen, kann unter Berücksichtigung der Länge B aus der Differenz X1 - X2 der Anlaufwinkel $\alpha$ ermittelt werden und es gilt:

$$\alpha = \text{tangens} \; ((X2 - X1) \; / \; B).$$

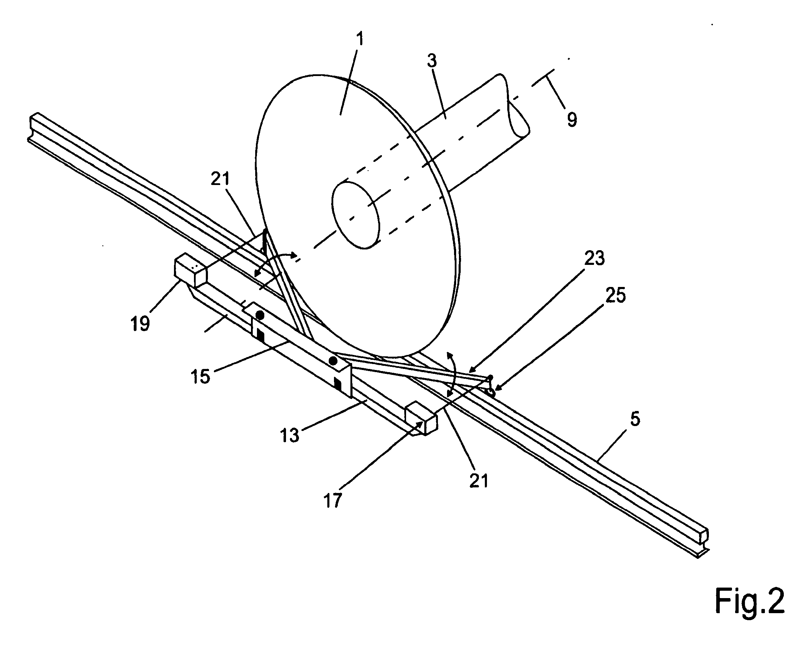

In Figur 2 ist ein erstes Ausführungsbeispiel einer erfindungsgemäßen Messvorrichtung dargestellt. Des Weiteren sind das Rad 1, die Achse 3 und die Schiene 5 dargestellt.

Die erfindungsgemäße Vorrichtung 11 umfasst einen Längsträger 13, der über ein Befestigungsteil 15 an dem nicht dargestellten Lagerbock des Drehgestells oder einem anderen Teil des Drehgestells befestigt werden kann. Wichtig ist jedoch, dass die Messvorrichtung immer die gleiche relative Lage zur Drehachse 9 des Rads hat und somit bei Änderungen des Anlaufwinkels $\alpha$ diese Winkeländerungen erfährt. An dem Befestigungsteil 15 können Bohrungen vorgesehen sein, mit deren Hilfe die erfindungsgemäße Vorrichtung 11 an dem Lagerbock oder einem anderen Teil des Drehgestells verschraubt werden kann.

An den Referenzpunkten $R_1$ und $R_2$ sind bei dem vorliegenden Ausführungsbeispiel ein erster Seilzugsensor 17 und ein zweiter Seilzugsensor 19 angeordnet. Seilzugsensoren sind aus dem Stand der Technik bekannt. Sie umfassen einen Drehwinkelsensor, der mit einer Spule drehfest verbunden ist. Auf diese Spule wird ein Seilzug 21 aufgewickelt. Ein Ende des Seilzugs 21 ist im vorliegenden Fall an einer Rolle 23 eines Messbügels 25 angeordnet. Die Messbügel 23 sind drehbar an dem Längsträger 13 befestigt, was durch Doppelpfeile angedeutet ist. Die Rolle 25 liegt am Schienenkopf der Schiene 5 an und wird durch eine Wickelfeder (nicht dargestellt) der Seilzugsensoren 19, 21 in Anlage an der Schiene 5 gehalten.

Wenn sich nun das Rad 1 beziehungsweise die Welle 3 des Rades verdreht, so dass der Anlaufwinkel $\alpha$ ungleich 0° ist, dann führt dies dazu, dass die Seilzüge 21 der Seilzugsensoren 17 und 19 entweder weiter aufgewickelt oder weiter herausgezogen werden. Dies führt zu einem entsprechend Ausgangssignal der Seilzugsensoren 17 und 19, welche in einer Auswerteeinheit (nicht dargestellt) weiterverarbeitet werden.

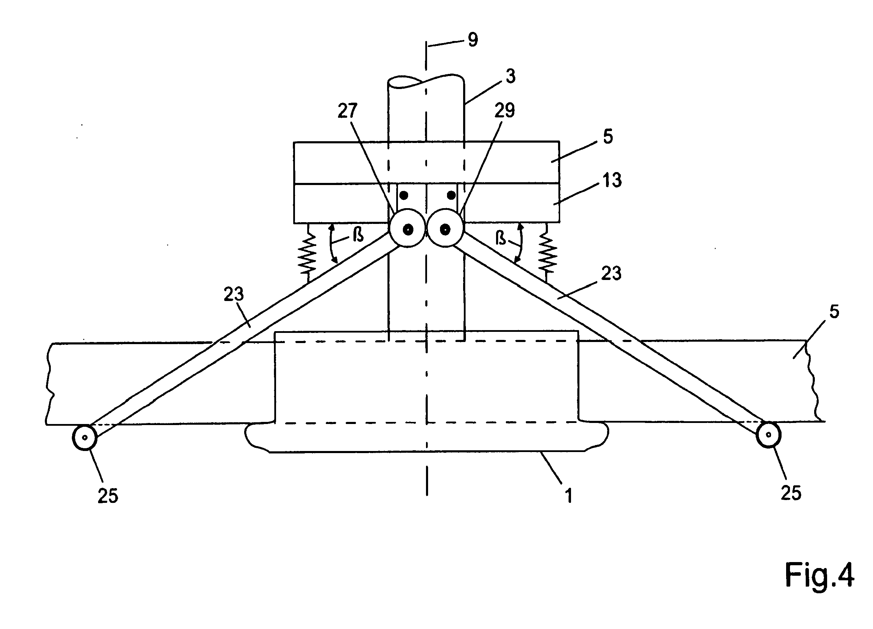

Der Messbügel 23 und die Rolle 25 dienen bei dem vorliegenden Ausführungsbeispiel dazu, die mechanische Belastung der Seilzugsensoren 17 und 19 zu minimieren. In aller Regel ist die Kraft, mit der die Seilzüge 21 von einer Rückstellfeder der Seilzugsensoren 17 und 19 gespannt werden, ausreichend , um die Rolle 25 in Anlage an der Schiene 5 zu halten. Es ist jedoch ohne Weiteres möglich und anhand des Ausführungsbeispiels gemäß Figur 4 auch bildlich dargestellt, zwischen den Messbügeln 23 und dem Längsträger 13 eine geeignet ausgelegte Zugfeder vorzusehen. Dadurch werden die Sensoren 17 und 19 weiter entlastet.

Die erfindungsgemäße Messvorrichtung, ist, wie sich aus Figur 2 erkennen lässt, sehr einfach aufgebaut und daher auch sehr robust.

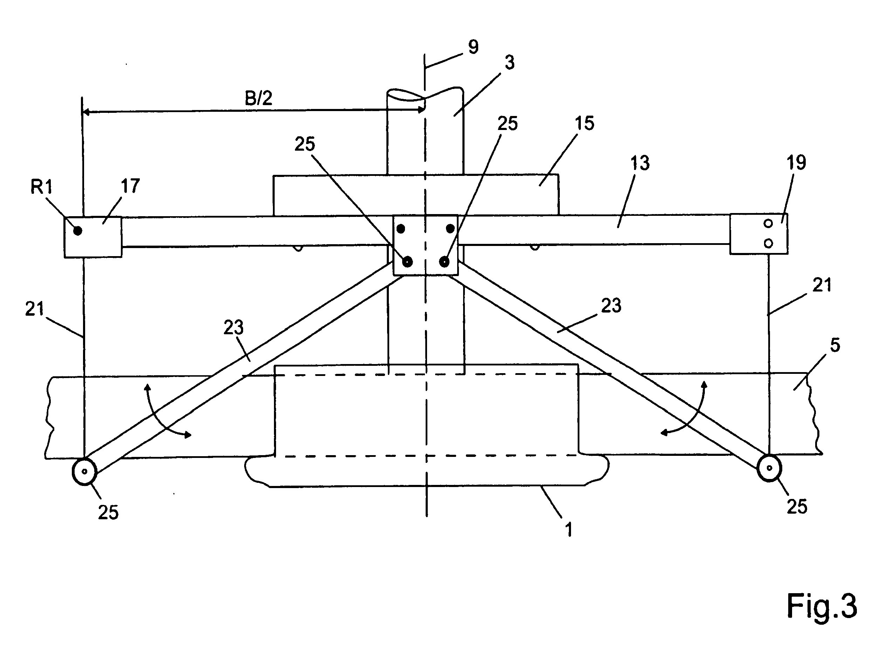

In Figur 3 ist eine Draufsicht auf das erste Ausführungsbeispiel gemäß Figur 2 dargestellt. Gleiche Bauteile haben das gleiche Bezugszeichen und es gilt das bezüglich Figur 3 Gesagte entsprechend. Aus dieser Draufsicht wird die Anlage der Rolle 25 an der Schiene 5 deutlicher. Des Weiteren sind die Drehpunkte 27 der Messbügel 23 gut zu erkennen. Die in den Figuren 2 und 3 dargestellten Ausführungsbeispiele weisen zwei Sensoren 17 und 19 auf. Es ist jedoch auch möglich, beispielsweise den in Figur 3 rechten Teil der Vorrichtung entfallen zu lassen. Dies bedeutet, dass der in Figur 3 rechte Messbügel sowie der zweite Seilzugsensor 19 entfallen.

Auch mit dieser vereinfachten Ausführungsform ist es möglich, unter Berücksichtigung des Abstands B/2 zwischen Drehachse 9 und dem Referenzpunkt $R_1$ beziehungsweise dem Ort, an dem der erste Sensor 17 befestigt ist, den Anlaufwinkel $\alpha$ zu bestimmen. Diese "vereinfachte Ausführungsform" kann besonders dann eingesetzt werden, kein Platz für einen zweiten Sensor 19 vorhanden ist. Außerdem ist dieses Ausführungsbeispiel natürlich kostengünstiger. Allerdings muss bei einer Messvorrichtung mit nur einem Sensor eine Kalibrierung vorgenommen werden, da Fehlstellungen der erfindungsgemäßen Vorrichtung relativ zu der Ebene des Rads 1 zu fehlerhaften Ergebnissen führen können.

Bei dem Ausführungsbeispiel gemäß Figur 4 ist der Längsträger 13 deutlich kürzer und es sind in den Drehpunkten der Messbügel 23 Drehwinkelsensoren 27 und 29 angeordnet. Diese Drehwinkelsensoren 27 und 29 erfassen den Winkel $\beta$ zwischen dem Längsträger 13 und den Messbügeln 23. Auch dadurch kann in Kenntnis der Länge der Messbügel 23 und der Position der Drehpunkte 25 aus der Differenz der Ausgangssignale der Drehwinkelsensoren 27 und 29 der Anlaufwinkel $\alpha$ mit Hilfe einfacher geometrischer Funktionen ermittelt werden.

**Patentansprüche**

1. Vorrichtung zum Messen des Anlaufwinkels ($\alpha$) zwischen einem Rad (1) und einer Schiene (5) umfassend mindestens einen Referenzpunkt ($R_1$, $R_2$), wobei der mindestens eine Referenzpunkt ($R_1$, $R_2$) zu einer Drehachse (9) des Rads (1) beabstandet ist und dieser Abstand (B/2) unabhängig von Lenkbewegungen des Rads (1) ist, und weiter umfassend mindestens einen Sensor (17, 19, 27, 29) zur Erfassung der Entfernung zwischen dem oder den Referenzpunkten ($R_1$, $R_2$) und der Schiene (5), insbesondere eines Schienenkopfs der Schiene (5), und eine Auswerteeinheit zur Weiterverarbeitung der Ausgangssignale des mindestens einen Sensors (17, 19, 27, 29).

2. Vorrichtung nach Anspruch 1, **dadurch gekennzeichnet, dass** sich der oder die Referenzpunkte ($R_1$, $R_2$) an einem Längsträger (13) angeordnet sind, und dass der Längsträger (13) an einem Lagerbock (4) des Rads (1) mindestens mittelbar befestigt ist.

3. Vorrichtung nach Anspruch 1 oder 2, **dadurch gekennzeichnet, dass** der erste Sensor (17, 27) und der zweite optionale Sensor (19, 29) an dem Längsträger (13) mindestens mittelbar befestigt sind.

4. Vorrichtung nach einem der vorhergehenden Ansprüche, **dadurch gekennzeichnet, dass** der erste Sensor (17, 27) und/oder der zweite Sensor (19, 29) auf einem berührungslosen Messprinzip, insbesondere einem optischen Messprinzip, basiert.

5. Vorrichtung nach einem der vorhergehenden Ansprüche, **dadurch gekennzeichnet, dass** der erste Sensor (17, 27) und/oder der zweite Sensor (19, 29) auf einem mechanisch berührenden Messprinzip, insbesondere einem induktiven oder kapazitiven elektrischen Längenmessverfahren, basiert.

6. Vorrichtung nach einem der vorhergehenden Ansprüche, **dadurch gekennzeichnet, dass** der erste Sensor (17) und der zweite Sensor (19) als Seilzugsensoren oder als Drehwinkelsensoren (27, 29) ausgebildet sind.

7. Vorrichtung nach einem der vorhergehenden Ansprüche, **dadurch gekennzeichnet, dass** an dem Längsträger (13) mindestens ein Messbügel (23) drehbar gelagert ist, und dass ein Ende des Messbügels (23) mindestens mittelbar an der Schiene (5), insbesondere dem Schienenkopf, anliegt.

8. Vorrichtung nach Anspruch 7, **dadurch gekennzeichnet, dass** an dem Messbügel (23) oder den Sensoren (17, 27, 19, 29) eine Rolle (25) vorgesehen ist.

9. Verfahren zum Messen des Anlaufwinkels ($\alpha$) zwischen einem Rad (1) und einer Schiene (5), **gekennzeichnet, dadurch, dass**

die Entfernung (X1, X2) zwischen einem oder mehreren Referenzpunkten ($R_1$, $R_2$), deren Lage relativ zum Rad (1) bzw der Achse (3) konstant ist und der Schiene (5) erfasst wird,
und dass der Anlaufwinkel ($\alpha$) aus dem Abstand (B/2.) zwischen einer Drehachse (9) des Rads (1) und dem oder den Referenzpunkten ($R_1$, $R_2$) sowie der Entfernung (X1, X2) zwischen dem oder den Referenzpunkten ($R_1$, $R_2$) und der Schiene (5) ermittelt wird.

10. Verfahren nach Anspruch 9, **dadurch gekennzeichnet, dass** die Entfernung (X1, X2) zwischen dem oder den Referenzpunkten ($R_1$, $R_2$) und der Schiene (5) aus den Ausgangssignalen des ersten Sensors (17, 27) und/oder dem zweiten Sensor (19, 29) ermittelt wird.

## Claims

1. Device for measuring the approach angle ($\alpha$) between a wheel (1) and a rail (5), comprising at least one reference point ($R_1$, $R_2$), whereby the at least one reference point ($R_1$, $R_2$) is spaced apart from a rotational axis (9) of the wheel (1) and said distance (B/2) being independent of steering movements of wheel (1), and further comprising at least one sensor (17, 19, 27, 29) for recording the distance between the reference point or the reference points ($R_1$, $R_2$) and the rail (5), in particular a rail head of rail (5), and an evaluation unit for further processing of the output signals of the at least one sensor (17, 19, 27, 29).

2. Device according to claim 1, **characterized in that** the reference point(s)($R_1$, $R_2$) is/are arranged at a longitudinal support (13), and that the longitudinal support (13) is at least indirectly fastened to a bearing block (4) of wheel (1).

3. Device according to claim 1 or 2, **characterized in that** the first sensor (17, 27) and the second optional sensor (19, 29) are at least indirectly fastened to the longitudinal support (13).

4. Device according to one of the preceding claims, **characterized in that** the first sensor (17, 27) and/or the second sensor (19, 29) is/are based on a non-contact measuring principle, in particular an optical measuring principle.

5. Device according to one of the preceding claims, **characterized in that** the first sensor (17, 27) and/or the second sensor (19, 29) is/are based on a mechanical contact measuring principle, in particular an inductive or capacitive electrical length measurement method.

6. Device according to one of the preceding claims, **characterized in that** the first sensor (17) and the second sensor (19) are designed as cable tension sensors or as torque angle sensors (27, 29).

7. Device according to one of the preceding claims, **characterized in that** at least one measuring strap (23) is pivotally supported on the longitudinal support (13), and that one end of the measuring strap (23) abuts, at least indirectly, on the rail (5), in particular the rail head.

8. Device according to claim 7, **characterized in that** a pulley (25) is provided at the measuring strap (23) or the sensors (17, 27, 19, 29).

9. Method for measuring the approach angle ($\alpha$) between a wheel (1) and a rail (5), **characterized in that** the distance (X1, X2) between one or several reference points ($R_1$, $R_2$), whose position relative to wheel (1) and/or the axis (3) is constant, and rail (5) is recorded, and that the approach angle ($\alpha$) is determined from the distance (B/2) between a rotational axis (9) of wheel (1) and the reference point or reference points ($R_1$, $R_2$) and the distance (X1, X2) between the reference point or reference points ($R_1$, $R_2$) and rail (5).

10. Method according to claim 9, **characterized in that** the distance (X1, X2) between the reference point or reference points ($R_1$, $R_2$) and rail (5) is determined from the output signals of the first sensor (17, 27) and/or the second sensor (19, 29).

**Revendications**

1. Dispositif de mesure de l'angle d'approche ($\alpha$) entre une roue (1) et un rail (5) comprenant au moins un point de référence ($R_1$, $R_2$), le au moins un point de référence ($R_1$, $R_2$) étant disposé à distance d'un axe de rotation (9) de la roue (1) et cette distance (B/2) étant indépendante de mouvements de manoeuvre de la roue (1), et comprenant en outre au moins un capteur (17, 19, 27, 29) de détermination de la distance entre le point de référence ou les points de référence ($R_1$, $R_2$) et le rail (5), notamment un champignon du rail (5), et une unité d'analyse pour traiter ultérieurement les signaux de sortie de l'au moins un capteur (17, 19, 27, 29).

2. Dispositif selon la revendication 1, **caractérisé en ce que** le point de référence ou les points de référence ($R_1$, $R_2$) est/sont disposé/s disposés sur un longeron (13) et **en ce que** le longeron (13) est rapporté au moins indirectement sur un support de palier (4) de la roue (1).

3. Dispositif selon la revendication 1 ou 2, **caractérisé en ce que** le premier capteur (17, 27) et le second capteur optionnel (19, 29) sont rapportés au moins indirectement sur le longeron (13).

4. Dispositif selon l'une des revendications précédentes, **caractérisé en ce que** le premier capteur (17, 27) et/ou le second capteur (19, 29) se fonde/nt sur un principe de mesure sans contact, notamment un principe de mesure optique.

5. Dispositif selon l'une des revendications précédentes, **caractérisé en ce que** le premier capteur (17, 27) et/ou le second capteur (19, 29) se fonde/nt sur un principe de mesure à contact mécanique, notamment un procédé de mesure de longueur électrique inductif ou capacitif.

6. Dispositif selon l'une des revendications précédentes, **caractérisé en ce que** le premier capteur (17) et le second capteur (19) sont conçus sous forme soit de capteurs à câble soit de capteurs d'angle de rotation (27, 29).

7. Dispositif selon l'une des revendications précédentes, **caractérisé en ce qu'**au moins un étrier de mesure (23) est logé de manière rotative sur le longeron (13) et **en ce qu'**une extrémité de l'étrier de mesure (23) s'applique au moins indirectement contre le rail (5), notamment contre le champignon du rail.

8. Dispositif selon la revendication 7, **caractérisé en ce qu'**un galet (25) est prévu sur l'étrier de mesure (23) ou sur les capteurs (17, 27, 19, 29).

9. Procédé de mesure de l'angle d'attaque ($\alpha$) entre une roue (1) et un rail (5), **caractérisé en ce qu'**il y a détermination de la distance (X1, X2) entre le rail (5) et un point ou plusieurs points de référence (R1, R2) dont la position par rapport à la roue (1) respectivement à l'axe (3) est constante, et **en ce que** la détermination de l'angle d'approche ($\alpha$) se fait à partir de l'écart (B/2) entre un axe de rotation (9) de la roue (1) et le point de référence ou les points de référence (R1, R2) ainsi qu'à partir de la distance (X1, X2) entre le point de référence ou les points de référence (R1, R2) et le rail (5).

10. Procédé selon la revendication 9, **caractérisé en ce que** la détermination de la distance (X1, X2) entre le point de référence ou les points de référence (R1, R2) et le rail (5) se fait sur la base des signaux de sortie du premier capteur (17, 27) et/ou du second capteur (19, 29).

EP 2 184 580 B1

Fig.1a

Fig.1b

Fig.2

Fig.3

EP 2 184 580 B1

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5368260 A